# EUROPEAN PATENT SPECIFICATION

(11) **EP 4 730 241 B1**
(45) Date of publication and mention of the grant of the patent: **12.08.2026**
(21) Application number: 25182402.5
(22) Date of filing: 12.06.2025
(51) Int. Cl.: G06Q 10/087, G07F 1/00

(54) **OBJECT FINDING METHOD AND OBJECT RELEVANT INFORMATION CREATING METHOD FOR INTELLIGENT CABINET SYSTEM**
OBJEKTFINDUNGSVERFAHREN UND OBJEKTRELEVANTES INFORMATIONSERZEUGUNGSVERFAHREN FÜR INTELLIGENTES SCHRANKSYSTEM
PROCÉDÉ DE RECHERCHE D'OBJET ET PROCÉDÉ DE CRÉATION D'INFORMATIONS RELATIVES À UN OBJET POUR SYSTÈME D'ARMOIRE INTELLIGENT

(30) Priority: 18.10.2024 TW 113139980
(43) Date of publication of application: 22.04.2026
(73) Proprietor: King Slide Technology Co., Ltd., Kaohsiung City 821011 (TW)
(72) Inventor: CHEN, Ken-Ching, Kaohsiung City 821010 (TW); LIU, Chun-Ta, Kaohsiung City 821010 (TW); SU, Hsin-Cheng, Kaohsiung City 821010 (TW); CHANG, Chih-Yuan, Kaohsiung City 821010 (TW); LIN, Shu-Chen, Kaohsiung City 821010 (TW)
(74) Representative: Viering, Jentschura & Partner mbB Patent- und Rechtsanwälte

(56) References cited:
- US-A1- 2017 053 099
- US-A1- 2020 143 315
- US-A1- 2020 226 545

## Description

### Field of the Invention

The present invention is related to an object finding method for an intelligent cabinet system.

### Background of the Invention

In the prior art, a cabinet usually comprises a plurality of movable members, such as drawers. The drawers can accommodate objects. However, a user may put various kinds of objects into the drawers, and the user often forgets which drawer a particular object is stored in, such that it is time consuming to find the object in the cabinet. US 2017/053099 A1 (COUGHLIN MICHAEL E [US] ET AL), published 23 February 2017 discloses a medical filing cabinet and a system to search objects.

### Summary of the Invention

This in mind, the present invention aims at providing an object finding method for an intelligent cabinet system.

This is achieved by an object finding method for an intelligent cabinet system according to claim 1. The dependent claims pertain to corresponding further developments and improvements.

As will be seen more clearly from the detailed description following below, the claimed object finding method is applicable to an intelligent cabinet system. The intelligent cabinet system comprises a cabinet body, a plurality of drawers, a control device, a control unit, an electronic module and a communication device. The plurality of drawers are arranged on the cabinet body and movable between a retracted position and an open position relative to the cabinet body. The control device is arranged on the cabinet body, and comprises a first storage unit. The control unit is electrically connected to the control device. The electronic module is electrically connected to the control unit, and the electronic module comprises a driving device configured to drive a driving member to move. The communication device comprises a processing module, a second storage unit and a camera module. At least one of the first storage unit and the second storage unit pre-stores a set of predetermined data comprising object information of at least one object and position information corresponding to the object information. The control unit is electrically connected to the control device in a wired manner, and the electronic module is electrically connected to the control unit in a wired manner. The object finding method comprises capturing an identification feature on a predetermined object by using a camera module of the communication device; the processing module searching for corresponding object information in the set of predetermined data according to the captured identification feature; and if the corresponding object information is found, the communication device transmitting a predetermined signal according to position information corresponding to the found object information, and the control device notifying the control unit to control the driving device to move the driving member to switch from a first predetermined state to a second predetermined state when the control device receives the predetermined signal, in order to allow the drawer corresponding to the position information to be moved away from the retracted position.

### Brief Description of the Drawings

In the following, the invention is further illustrated by way of example, taking reference to the accompanying drawings thereof:
FIG. 1 is a diagram showing an intelligent cabinet system having a cabinet body arranged with a plurality of movable members according to an embodiment of the present invention;
FIG. 2 is a diagram showing a plurality of slide rail assemblies of the intelligent cabinet system being in a retracted state according to the embodiment of the present invention;
FIG. 3 is a diagram showing the plurality of slide rail assemblies of the intelligent cabinet system being in an open state according to the embodiment of the present invention;
FIG. 4 is a diagram showing the intelligent cabinet system according to the embodiment of the present invention;
FIG. 5 is a diagram showing the intelligent cabinet system having a control device and at least one control unit electrically connected to each other in a wired manner with the control unit being configured to control a corresponding movable member;
FIG. 6 is a diagram showing one of the movable members on the cabinet body of the intelligent cabinet system being opened according to the embodiment of the present invention;
FIG. 7 is a diagram showing the control device, the control unit and an electronic module electrically connected to each other in a wired manner with a second rail being retracted relative to a first rail of the slide rail assembly according to the embodiment of the present invention;
FIG. 8 is a diagram showing the control device, the control unit and the electronic module electrically connected to each other in a wired manner with the second rail of the slide rail assembly being moved to an open position in response to an elastic force of an elastic member according to the embodiment of the present invention;
FIG. 9 is a diagram showing one of the movable members on the cabinet body of the intelligent cabinet system being opened with one object being stored in the opened movable member according to the embodiment of the present invention;
FIG. 10 is a diagram showing a communication device of the intelligent cabinet system being installed with an application program with a screen of the communication device displaying functions of the application program according to the embodiment of the present invention;
FIG. 11 is a diagram showing the screen of the communication device displaying object information and position information according to the embodiment of the present invention;
FIG. 12 is a diagram showing the communication device having a camera module capable of capturing an identification feature of an object;
FIG. 13 is a flow chart of finding an object stored in the intelligent cabinet system according to the embodiment of the present invention; and
FIG. 14 is another flow chart of finding an object stored in the intelligent cabinet system according to the embodiment of the present invention;
FIG. 15 is a diagram showing the communication device capable of capturing a QR-code on a receipt; and
FIG. 16 is a flow chart of creating relevant information of an object in the intelligent cabinet system according to the embodiment of the present invention.

### Detailed Description

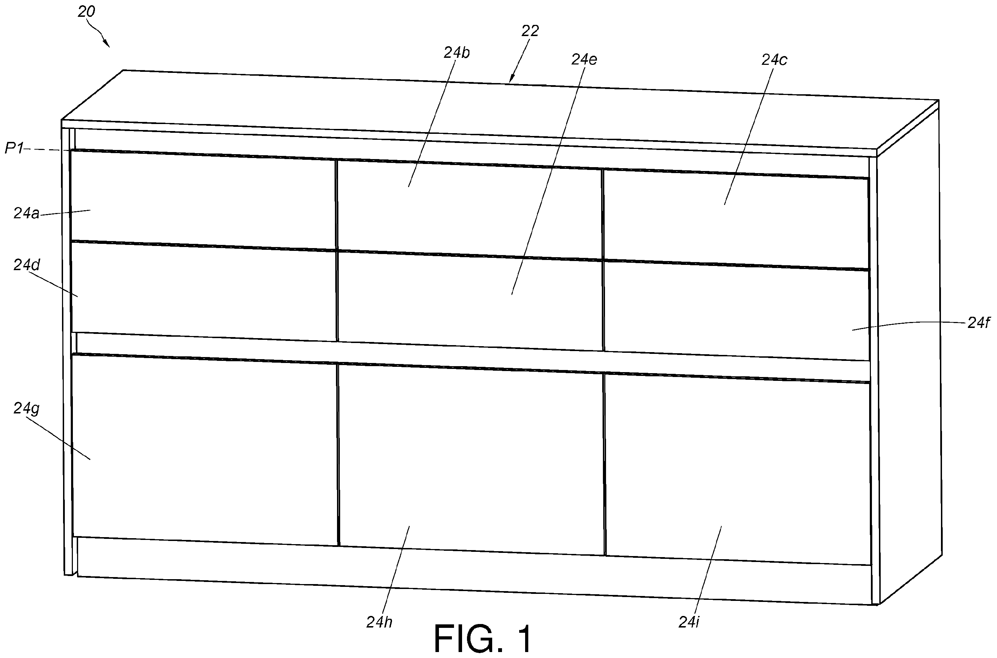

As shown in FIG. 1, an intelligent cabinet system 20 comprises a cabinet body 22 and a plurality of movable members arranged on the cabinet body 22 according to an embodiment of the present invention. The movable members can be drawers or door panels. In the present embodiment, the movable members are drawers, but the present invention is not limited thereto. Moreover, the intelligent cabinet system 20 has nine drawers, such as a first drawer 24a to a ninth drawer 24i. However, the number of the movable members is not limited by the embodiment. Furthermore, difference between the first drawer 24a to the sixth drawer 24f and the seventh drawer 24g to the ninth drawer 24i is only the size of the drawers.

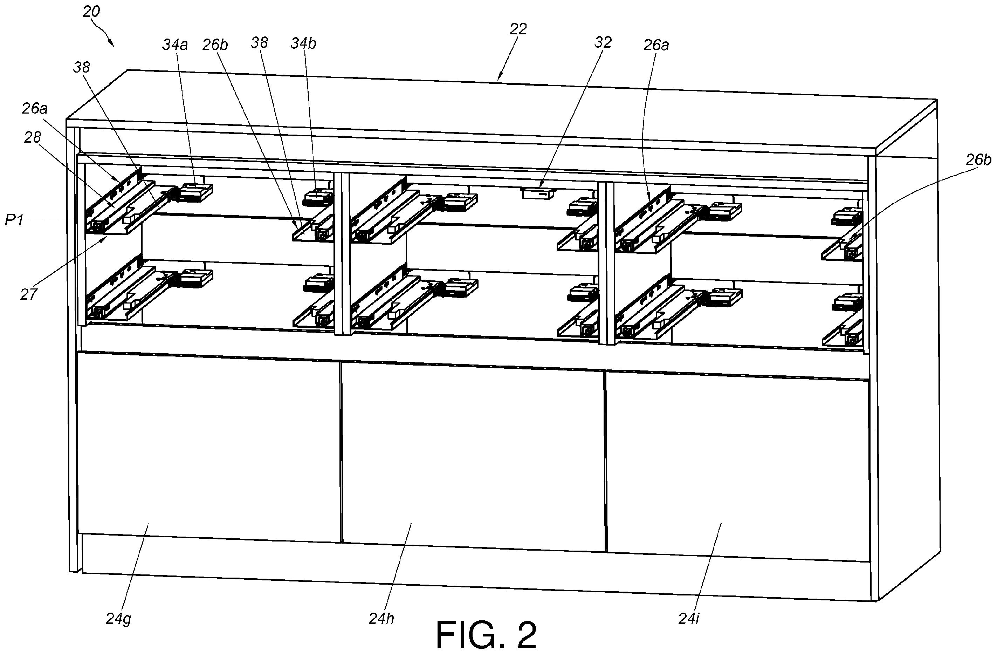

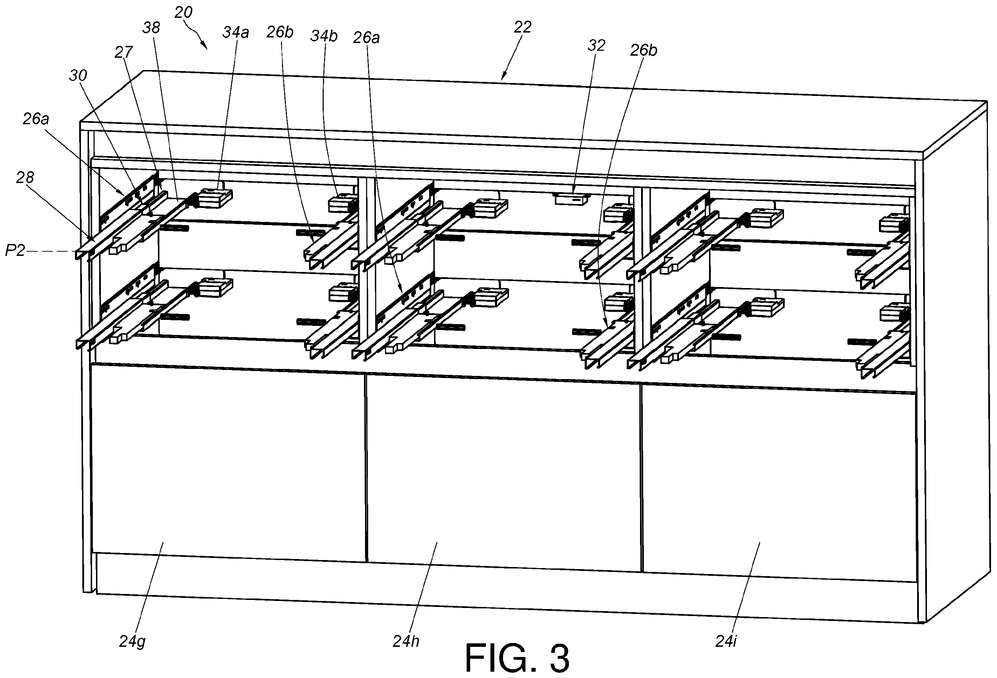

As shown in FIG. 2 and FIG. 3, the cabinet body 22 is formed with a plurality of accommodating spaces configured to correspondingly accommodate the drawers. In FIG. 2 and FIG. 3, the first drawer 24a to the sixth drawer 24f have been removed from the accommodating spaces of the cabinet body 22. Preferably, the intelligent cabinet system 20 further comprises a plurality of slide rail assemblies configured to correspondingly support the drawers. For example, a first slide rail assembly 26a and a second slide rail assembly 26b are paired and configured to support a left side and a right side of a bottom of a corresponding drawer respectively. The first slide rail assembly 26a and the second slide rail assembly 26b have substantially identical structural configuration, but the present invention is not limited thereto.

Each of the slide rail assemblies (such as the first slide rail assembly 26a or the second slide rail assembly 26b) comprises a first rail 27 and a second rail 28 longitudinally movable relative to each other. The first rail 27 is configured to be mounted (such as fixed) to a predetermined wall of the cabinet body 22, and the second rail 28 is configured to carry the drawer. The second rail 28 is movable between a retracted position P1 (as shown in FIG. 2) and an open position P2 (as shown in FIG. 3) relative to the first rail 27, so as to improve smoothness of movement of the drawer between the retracted position P1 and the open position P2 relative to the cabinet body 22. Preferably, each of the slide rail assemblies (such as the first slide rail assembly 26a or the second slide rail assembly 26b) further comprises a third rail 30 movably mounted between the first rail 27 and the second rail 28 in order to extend a traveling distance of the second rail 28 relative to the first rail 27.

The intelligent cabinet system 20 further comprises a control device 32 (or a controller) and a plurality of electronic modules. The control device 32 is arranged on the cabinet body 22. For example, the control device 32 is arranged on a predetermined part inside the accommodating space of the cabinet body 22, but the present invention is not limited thereto. The electronic modules are arranged in pairs. For example, a first electronic module 34a and a second electronic module 34b are paired to be arranged adjacent to the left side and the right side of the bottom of the corresponding drawer respectively. The first electronic module 34a and the second electronic module 34b have substantially identical structural configuration, and each of the electronic modules (such as the first electronic module 34a or the second electronic module 34b) is correspondingly arranged on an extension part 38 of a first rail 27 of the slide rail assembly (such as the first rail assembly 26a or the second rail assembly 26b) .

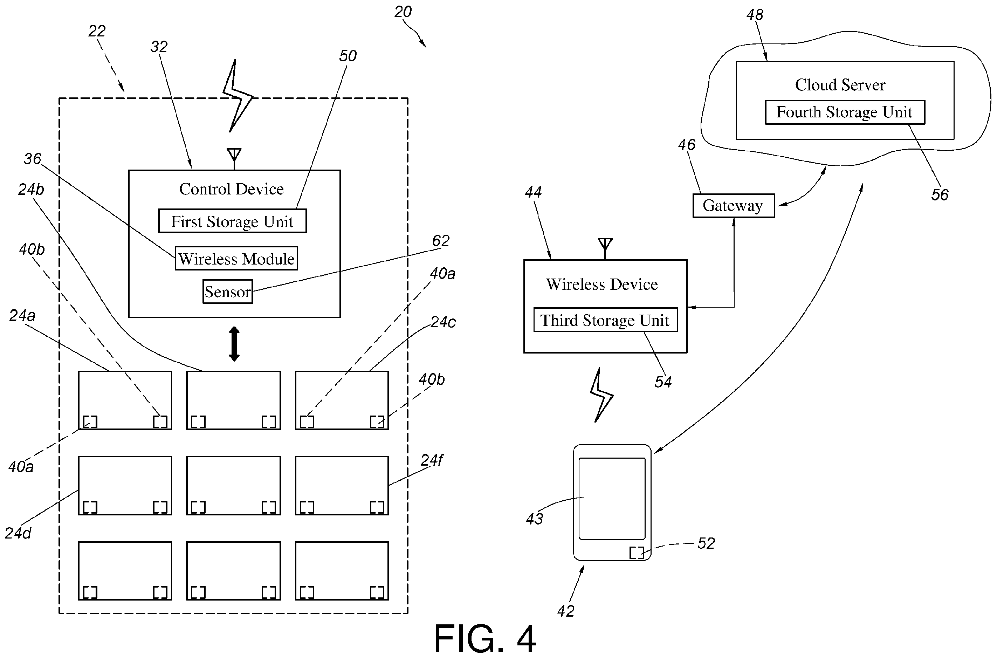

As shown in FIG. 4, the intelligent cabinet system 20 further comprises a plurality of control units arranged on the cabinet body 22. For example, a first control unit 40a and a second control unit 40b are paired to be arranged adjacent to the left side and the right side of the bottom of the corresponding drawer respectively. The first control unit 40a and the second control unit 40b have substantially identical structural configuration. In the present embodiment, each of the first control units 40a is integrated into a corresponding first electronic module 34a, and each of the second control units 40b is integrated into a corresponding second electronic modules 34b, but the present invention is not limited thereto. Each of the control units is electrically connected to a corresponding electronic module. For example, the first control unit 40a is electrically connected to the corresponding first electronic module 34a, and the second control unit 40b is electrically connected to the corresponding second electronic module 34b. Furthermore, the first control units 40a and the second control units 40b are electrically connected to the control device 32. Preferably, the first control units 40a and the second control units 40b are electrically connected to the control device 32 in a wired manner.

The intelligent cabinet system 20 further comprises a communication device 42. Preferably, the intelligent cabinet system 20 further comprises a wireless device 44, a gateway 46, and a cloud server 48.

The communication device 42, the wireless device 44 and the control device 32 are configured to be linked to each other through wireless communication. In the present embodiment, the communication device 42 is configured to establish a wireless communication link with the control device 32 through the wireless device 44, but the present invention is not limited thereto. The wireless device 44 can be a wireless access point or a wireless router, but the present invention is not limited thereto. In the present embodiment, the communication device 42 is configured to establish a communication link with the control device 32 through the wireless device 44 by using Wi-Fi technology. In other embodiment, the communication device 42 can establish a communication link with the control device 32 by using Bluetooth technology.

In addition, the wireless device 44 and the gateway 46 are configured to be linked to each other, such that application environment of the intelligent cabinet system 20 can be extended from a local area network (LAN) to a wide area network (WAN). Furthermore, the wireless device 44 is configured to establish a communication link with the cloud server 48 through the gateway 46. On the other hand, the communication device 42 is configured to establish a communication link with the cloud server 48 through the wireless device 44 and the gateway 46**.** Alternatively, the communication device 42 can establish a communication link with the cloud server 48 by using mobile communication technology, such as fourth generation mobile communication technology (4G) or fifth generation mobile communication technology (5G). The communication device 42 can be a smart phone or a tablet computer, but the present invention is not limited thereto. Preferably, the communication device 42 is installed with an application program.

Preferably, the control device 32 comprises a first storage unit 50 configured to store a set of predetermined data of the intelligent cabinet system 20. The set of predetermined data can comprises object information and/or position information. For example, the object information is information of a specific object stored in the intelligent cabinet system 20; and the position information is information of the corresponding drawer storing the aforementioned specific object. Moreover, the set of predetermined data can comprise a state of each of the drawers (such as a retracted state or an open state) . The electronic module (such as the first electronic module 34a or the second electronic module 34b) can comprises a sensing unit configured to determined the drawer is in the retracted state when sensing that the second rail 28 is located at the retracted position P1 relative to the first rail 27, and configured to determined the drawer is in the open state when sensing that the second rail 28 is no longer located at the retracted position P1 relative to the first rail 27. Moreover, the set of predetermined data can comprise system power information of the intelligent cabinet system 20 (such as residual power information of the intelligent cabinet system 20) . However, the content of the set of predetermined data is not limited thereto.

Preferably, the first storage unit 50 can be a memory card (such as a microSD memory Card), but the present invention is not limited thereto.

Preferably, the communication device 42 comprises a second storage unit 52, the wireless device 44 comprises a third storage unit 54, and the cloud server 48 comprises a fourth storage unit 56. The third storage unit 54 can be a memory card or a USB flash drive, but the present invention is not limited thereto.

Preferably, the control device 32 further comprises a wireless module 36. The communication device 42 is configured to establish a wireless communication link with the wireless module 36 of the control device 32, such that the set of predetermined data stored in the first storage unit 50 of the control device 32 can be synchronously updated and stored in the second storage unit 52 of the communication device 42.

Preferably, the wireless device 44 is configured to establish a wireless communication link with the wireless module 36 of the control device 32 through operating the communication device 42, such that the set of predetermined data stored in the first storage unit 50 of the control device 32 can be synchronously updated and stored in the third storage unit 54 of the wireless device 44.

Preferably, the wireless device 44 is configured to establish a wireless communication link with the cloud server 48 through operating the communication device 42, such that the set of predetermined data stored in the third storage unit 54 of the wireless device 44 can be synchronously updated and stored in the fourth storage unit 56 of the cloud server 48**.** Moreover, the set of predetermined data stored in the second storage unit 52 of the communication device 42 can be synchronously updated and stored in the third storage unit 54 of the wireless device 44. Other user can use another communication device to establish a communication link with the wireless device 44 to download the set of predetermined data stored in the third storage unit 54 of the wireless device 44**,** in order to obtain information of objects stored in the drawers of the intelligent cabinet system 20.

Therefore, the set of predetermined data stored in the control device 32, the communication device 42, the wireless device 44 and the cloud server 48 can be synchronously updated with each other, such that the communication device 42 carried by the user can execute the application program to establish the wireless communication link with the control device 32, the wireless device 44 and/or the cloud server 48 whether indoors or outdoors, in order to obtain the latest set of predetermined data. For example, when the user is indoors, the communication device 42 can establish the wireless communication link with the wireless device 44 or the control device 32 in order to obtain the latest set of predetermined data; when the user is outdoors, the communication device 42 can establish the wireless communication link with the cloud server 48 in order to obtain the latest set of predetermined data, but the present invention is not limited thereto.

Moreover, an administrator of the intelligent cabinet system 20 (such as the user of the communication device 42) can use the communication device 42 to provide permission to allow another communication device to access the intelligent cabinet system 20. For example, the communication device 42 can provide a barcode or a QR-code to another communication device for obtaining relevant settings of the intelligent cabinet system 20, such that a user using the other communication device can quickly operate the intelligent cabinet system 20.

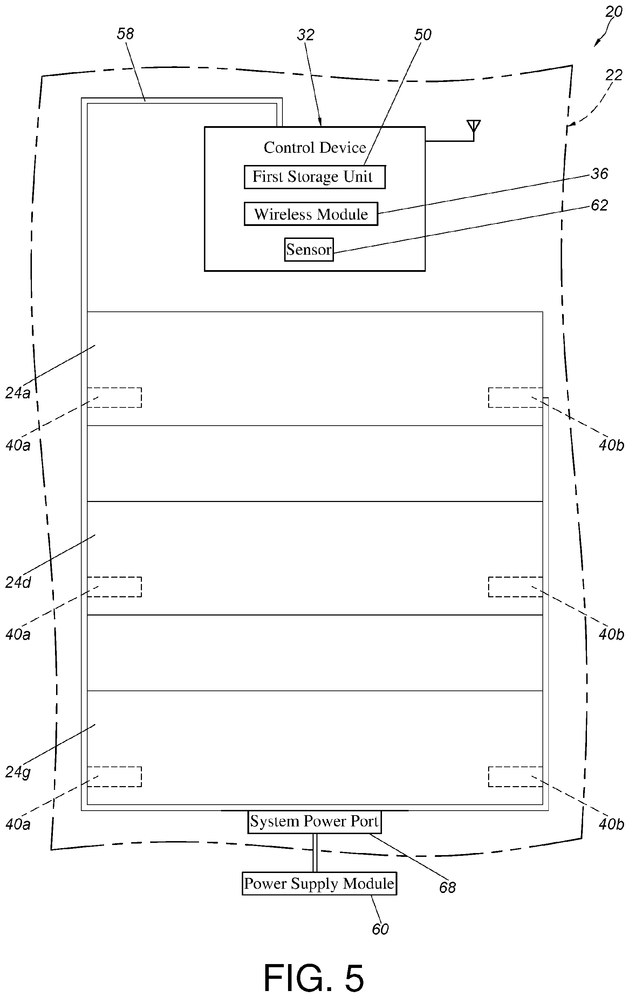

As shown in FIG. 5, each of the control units (such as the first control unit 40a or the second control unit 40b) is electrically connected to the control device 32 through a cable 58 (such as a Controller Area Network bus (CAN bus) or an RS485 communication cable). Specifically, the control units (such as the first control units 40a and the second control units 40b), the electronic modules (such as the first electronic modules 34a and the second electronic modules 34b) and the control device 32 are electrically connected to each other through the interference-resistant cables 58 (such as the Controller Area Network buses or the RS485 communication cables). Furthermore, signals or packets transmitted between the control device 32, the control units and the electronic modules can be encrypted either dynamically or statically in order to avoid interception and decryption of the signals or packets.

In addition, each of the drawers (such as the first drawer 24a to the ninth drawer 24i) works with a corresponding pair of the first control unit 40a and the second control unit 40b. The control device 32 is configured to control each of the drawers to be opened from the retracted state through the control units (such as the corresponding pair of the first control unit 40a and the second control unit 40b) and the corresponding electronic modules (such as the first electronic module 34a and the second electronic module 34b).

Moreover, each of the drawers and its corresponding first control unit 40a and second control unit 40b has an identification code. For example, the identification code of the first drawer 24a can be set to "11111", the identification code of the first control unit 40a corresponding to the first drawer 24a can be set to "111111", and the identification code of the second control unit 40b corresponding to the first drawer 24a can be set to "011111". The first digit "1" of the identification code of the first control unit 40a represents the left side, and the second to sixth digits "11111" of the identification code of the first control unit 40a represent that the first control unit 40a corresponds to the first drawer 24a. In other words, the identification code "111111" can be interpreted as the control unit responsible for the left side of the first drawer 24a. On the other hand, the first digit "0" of the identification code of the second control unit 40b represents the right side, and the second to sixth digits "11111" of the identification code of the second control unit 40b represent that the second control unit 40b corresponds to the first drawer 24a. In other words, the identification code "011111" can be interpreted as the control unit responsible for the right side of the first drawer 24a. Accordingly, the control device 32 can determine which pair of the first control unit 40a and the second control unit 40b to notify according to the identification code of the drawer, in order to further control the corresponding pair of electronic modules. However, the format of the identification code is not limited by the present embodiment. The user can also use the application on the communication device 42 to write exclusive or customized identification codes into the first control unit 40a and the second control unit 40b.

Therefore, the control device 32 is configured to establish the communication links with the wireless device 44, the communication device 42, and the cloud server 48 in a wireless manner, and the control device 32 is configured to establish the communication links with the control units (such as the first control units 40a and the second control units 40b) and the electronic modules (such as the first electronic modules 34a and the second electronic modules 34b) in a wired manner.

Preferably, the intelligent cabinet system 20 further comprises a power supply module 60 configured to supply power to a system power port 68. The system power port 68 is electrically connected to the control device 32, the control units (such as the first control units 40a and the second control units 40b) and the electronic modules (such as the first electronic modules 34a and the second electronic modules 34b) through the cable 58. As such, the power supply module 60 can provide power required by the control device 32, the control units (such as the first control units 40a and the second control units 40b) and the electronic modules (such as the first electronic modules 34a and the second electronic modules 34b) through the system power port 68. The power supply module 60 is also electrically connected to the system power port 68 in a wired manner (such as through the Controller Area Network bus (CAN bus) or the RS485 communication cable).

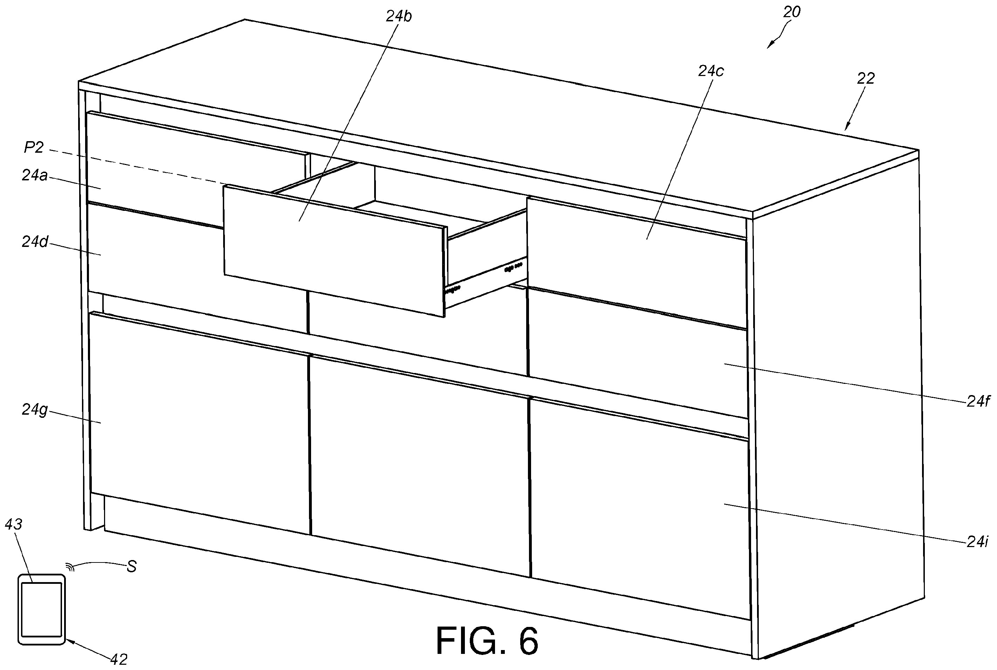

Preferably, the intelligent cabinet system 20 further comprises a sensor 62 arranged on the cabinet body 22. The sensor 62 is electrically connected to the control device 32. In the present embodiment, the sensor 62 is integrated into the control device 32. The sensor 62 is configured to sense whether someone is approaching the cabinet body 22. When the sensor 62 senses that someone is approaching the cabinet body 22, the intelligent cabinet system 20 is configured to be switched from a power saving mode to an operating mode, such that the wireless module 36 of the control device 32 is configured to be activated to receive a predetermined signal S from the communication device 42 (please also refer to FIG. 6). For example, when the intelligent cabinet system 20 is in the power saving mode, the control device 32 is configured to control the power supply module 60 to only supply power to the sensor 62 without supplying power to other components (such as the wireless module 36, the control units and the electronic modules, etc.); and when the intelligent cabinet system 20 is in the operating mode, the control device 32 is configured to control the power supply module 60 to supply power to all of the related components, but the present invention is not limited thereto. Therefore, the arrangement of the sensor 62 can allow the intelligent cabinet system 20 to be switched from the operating mode to the power saving mode in order to reduce power consumption. In other words, when the intelligent cabinet system 20 is in the power saving mode, the intelligent cabinet system 20 can have lower power consumption.

Preferably, the sensor 62 is a radar sensor. The radar sensor has several frequency bands applicable to several frequency resolutions required by different environments. Diversity of objects stored in the drawers may affect reflection and transmission of electromagnetic waves. In the present embodiment, the sensor 62 uses electromagnetic waves with a frequency of 60GHz for sensing, since the electromagnetic wave with the frequency of 60GHz has a shorter wavelength, such that it is easier to diffract and penetrate obstacles. In the present embodiment, the sensor 62 is a radar sensor, but the present invention is not limited thereto. The sensor 62 can be other types of sensors.

As shown in FIG. 6, the communication device 42 is configured to transmit the predetermined signal S, such as a control signal, through the application program in order to control one of the drawers on the cabinet body 22 to be open. For example, the second drawer 24b is moved from the retracted position P1 to the open position P2 to be opened.

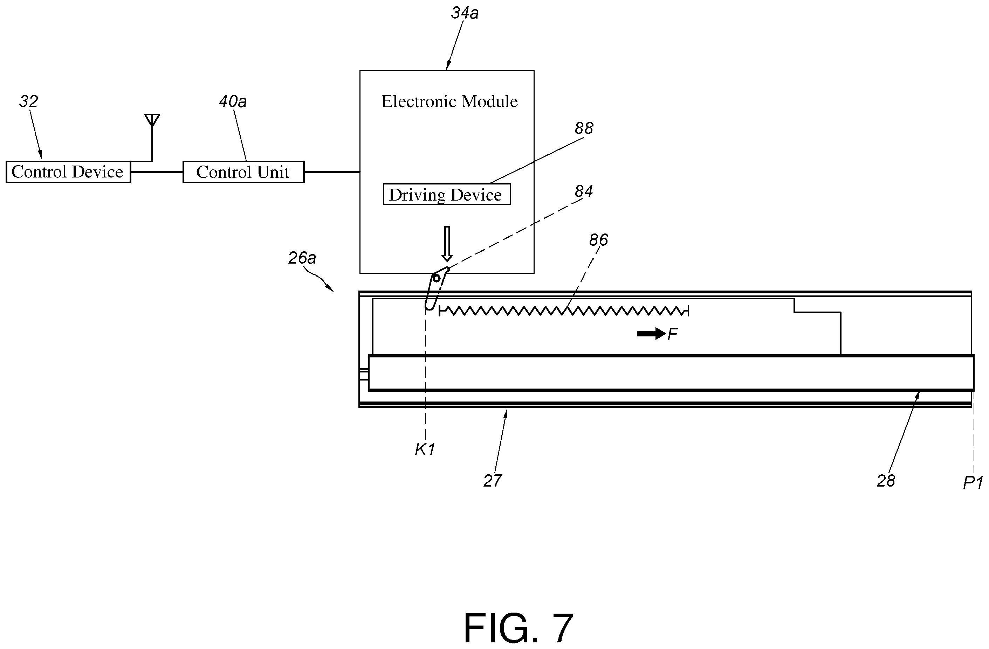

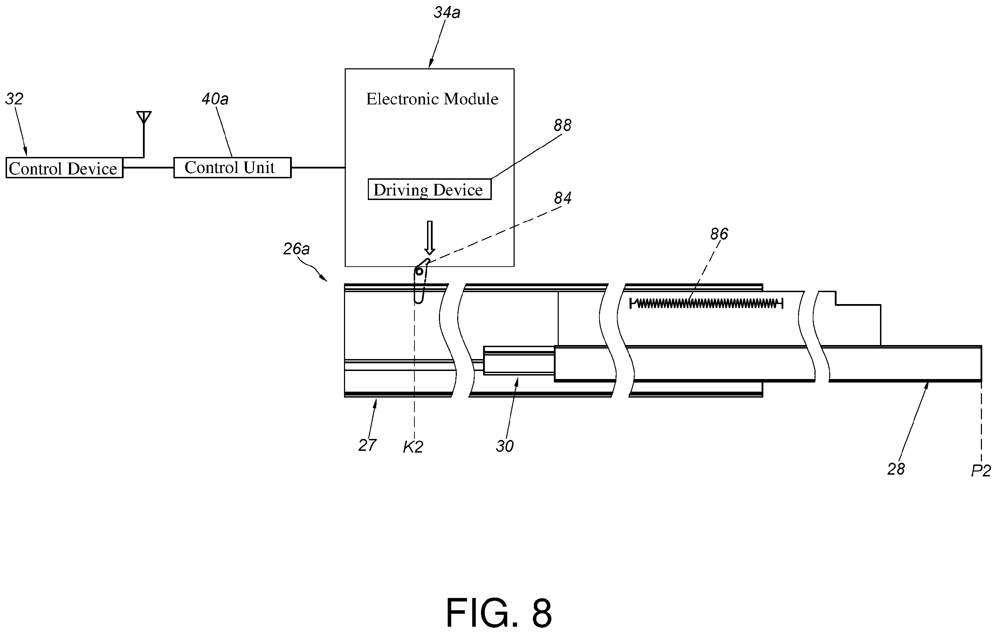

FIG. 7 and FIG. 8 illustrate processes of opening the drawer (such as the second drawer 24b) on the cabinet body 22. FIG. 7 and FIG. 8 only show the first electronic module 34a, the first control unit 40a and the first slide rail assembly 26a corresponding to the second drawer 24b for illustration, but the second electronic module 34b, the second control unit 40b and the second slide rail assembly 26b corresponding to the second drawer 24b also operate in the same or similar manner. Furthermore, the first electronic module 34a, the first control unit 40a and the control device 32 are electrically connected to each other through the Controller Area Network buses or the RS485 communication cables. The first electronic module 34a comprises a driving device 88 configured to drive a driving member 84 to move. On the other hand, the first slide rail assembly 26a is a push-open slide rail assembly. Specifically, the first slide rail assembly 26a further comprises an elastic member 86. When the second rail 28 of the first slide rail assembly 26a carrying the drawer (such as the second drawer 24b in FIG. 1) is located at the retracted position P1 relative to the first rail 27, the second drawer 24b is correspondingly located at the retracted position P1 relative to the cabinet body 22. As such, the elastic member 86 is configured to accumulate a predetermined elastic force F (as shown in FIG. 7).

The control device 32 is configured to receive the predetermined signal S from the communication device 42 (the content of the predetermined signal S comprises the identification code of the second drawer 24b and/or comprises the identification code of the first control unit 40a corresponding to the second drawer 24b). When the control device 32 receives the predetermined signal S, the control device 32 is configured to notify the first control unit 40a corresponding to the second drawer 24b according to the identification code in the predetermined signal S, in order to control the driving device 88 to drive the driving member 84 to move to switch from a first predetermined state K1 (as shown in FIG. 7) to a second predetermined state K2 (as shown in FIG. 8), so as to allow the second drawer 24b to be moved away from the retracted position P1.

Preferably, when the driving member 84 is moved to switch from the first predetermined state K1 to the second predetermined state K2, the predetermined elastic force F of the elastic member 86 is released to the second rail 28, such that the second rail 28 is configured to be driven to move the second drawer 24b from the retracted position P1 (as shown in FIG. 7) to the open position P2 (as shown in FIG. 8) in response to the predetermined elastic force F released by the elastic member 86. During a process of the driving member 84 being moved to switch from the first predetermined state K1 to the second predetermined state K2, the driving member 84 is configured to activate the elastic member 86 to release the predetermined elastic force F. For example, the driving member 84 can directly contact the elastic member 86 in order to activate the elastic member 86 to release the predetermined elastic force F; or the driving member 84 can indirectly activate a predetermined device locking the elastic member 86 through other predetermined components, such that the elastic member 86 can release the predetermined elastic force F.

Preferably, the driving device 88 is a motor or an electromagnetic actuator, but the present invention is not limited thereto. For example, when the driving device 88 is a motor, a rotating shaft of the driving device 88 can directly drive the driving member 84 to move to switch from the first predetermined state K1 to the second predetermined state K2, or the rotating shaft of the driving device 88 can indirectly drive the driving member 84 through related components to move to switch from the first predetermined state K1 to the second predetermined state K2; when the driving device 88 is an electromagnetic actuator, the driving device 88 can drive related components to move the driving member 84 to switch from the first predetermined state K1 to the second predetermined state K2 by electromagnetic force.

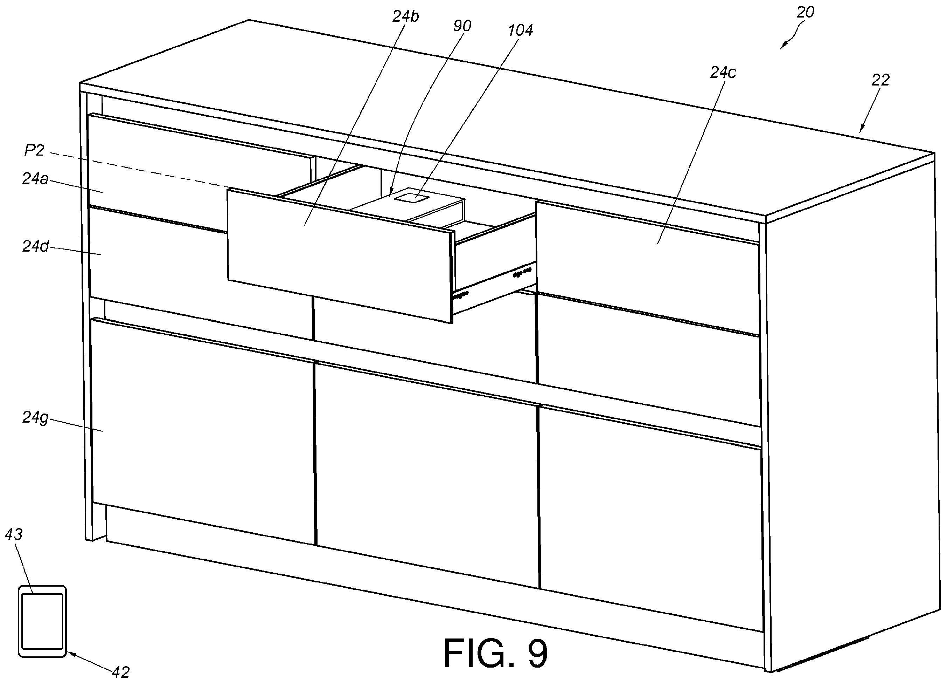

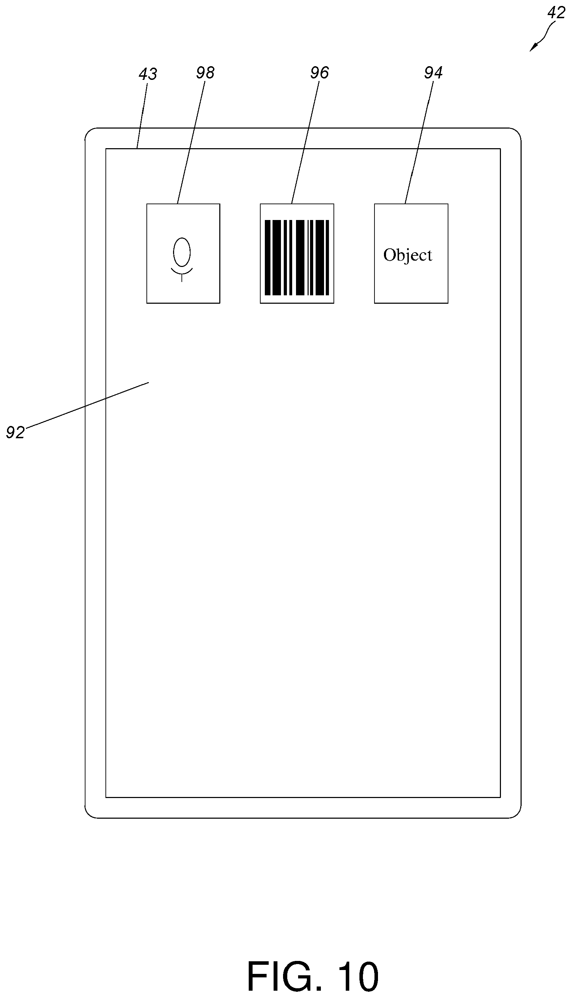

As shown in FIG. 9 to FIG. 11, when the second drawer 24b is located at the open position P2 relative to the cabinet body 22, the user can place and store a first predetermined object 90 (such as a piece of soap shown in Figure 9, but the present invention is not limited thereto) in the second drawer 24b. A screen 43 (such as a touch screen) of the communication device 42 is configured to display an operating interface 92 of the application program to provide related functions for the user to select. In the present embodiment, the operating interface 92 provides an object function 94, a barcode function 96 and a voice function 98 (as shown in FIG. 10), but the present invention is not limited thereto. Moreover, the second drawer 24b is only illustrated as an example, and the user can open another drawer to place and store the first predetermined object 90 or other objects.

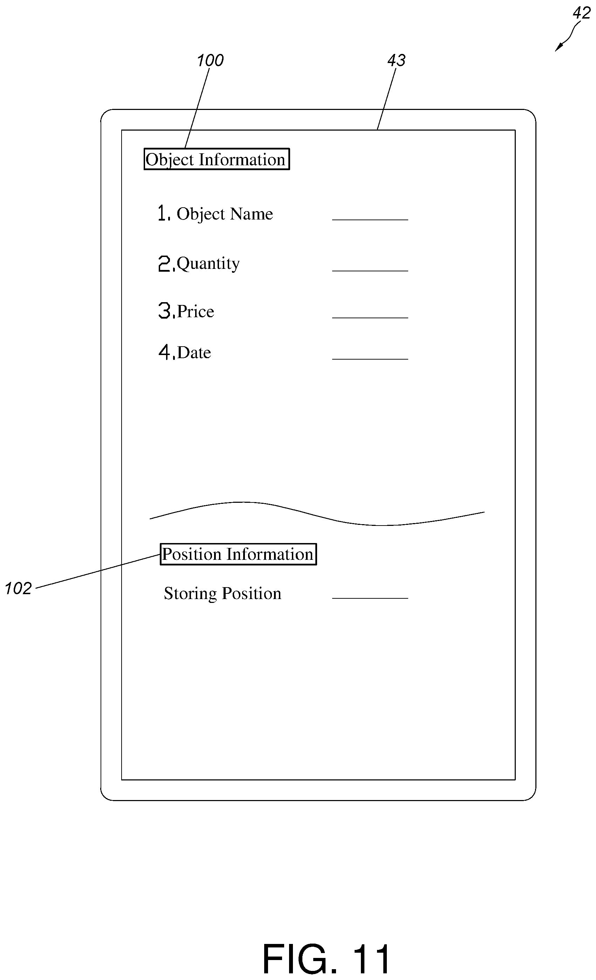

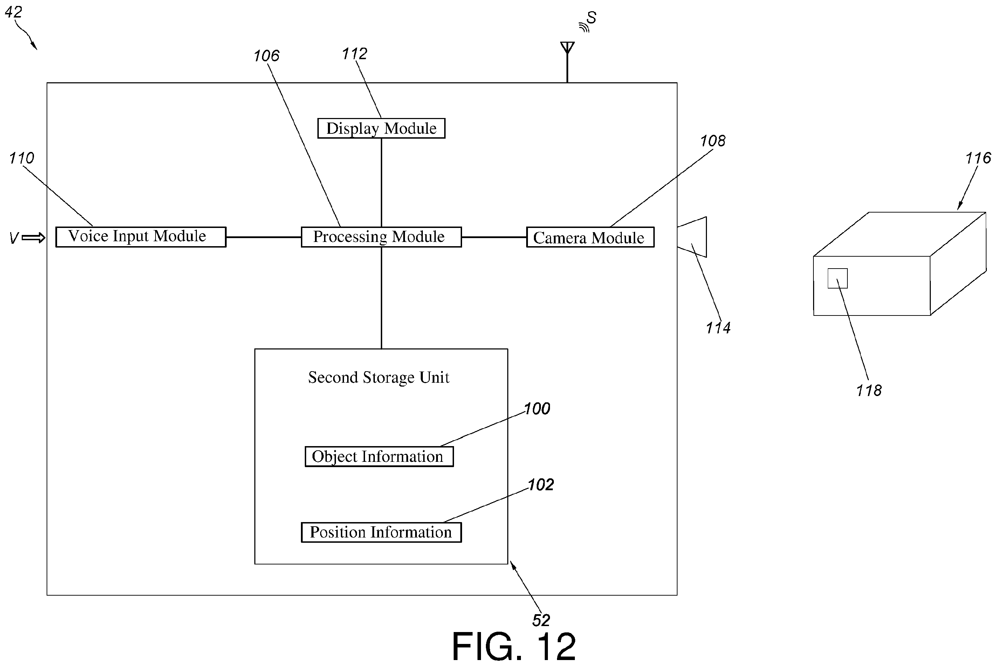

Furthermore, the user can input object information 100 and position information 102 through the object function 94 (as shown in FIG. 11). The object information 100 and the position information 102 can be pre-stored in the second storage unit 52 of the communication device 42 (please also refer to FIG. 12) as part of the set of predetermined data. When the communication device 42 establishes the wireless communication link with the control device 32, the set of predetermined data stored in the second storage unit 52 can be synchronously updated and stored in the first storage unit 50 of the control device 32 on the cabinet body 22. In other words, the first storage unit 50 and the second storage unit 52 have pre-stored the object information 100 and the position information 102.

Preferably, the object information 100 comprises information of object name, quantity, price and/or date of the first predetermined object 90 (as shown in FIG. 11). In the present embodiment, since the first predetermined object 90 is placed and stored in the second drawer 24b and the second drawer 24b can be further moved to the retracted position P1 to be closed (as shown in FIG. 1), the user can input information of the second drawer 24b to be stored as the position information 102 of the first predetermined object 90. After manually inputting (or editing) the object information 100 and the position information 102, the user can select an save option in order to stored the object information 100 and the position information 102 as part of the set of predetermined data in the second storage unit 52, so as to record that the first predetermined object 90 has been stored in the second drawer 24b.

Preferably, the first predetermined object 90 has a first identification feature 104 (as shown in FIG. 9), such as a barcode or a QR-code, but the present invention is not limited thereto. The first identification feature 104 has relevant information of the first predetermined object 90, such as the object name and the price of the first predetermined object 90.

As shown in FIG. 12, the communication device 42 comprises a processing module 106, the second storage unit 52, a camera module 108, a voice input module 110, and a display module 112 electrically connected to each other. The processing module 106 is a central processing unit of the communication device 42; the second storage unit 52 is a memory; the camera module 108 comprises a lens 114; the voice input module 110 is configured to receive a voice input from the user; and the display module 112 comprises the screen 43 (please also refer to FIG. 11). The communication device 42 is configured to find objects stored in the intelligent cabinet system 20.

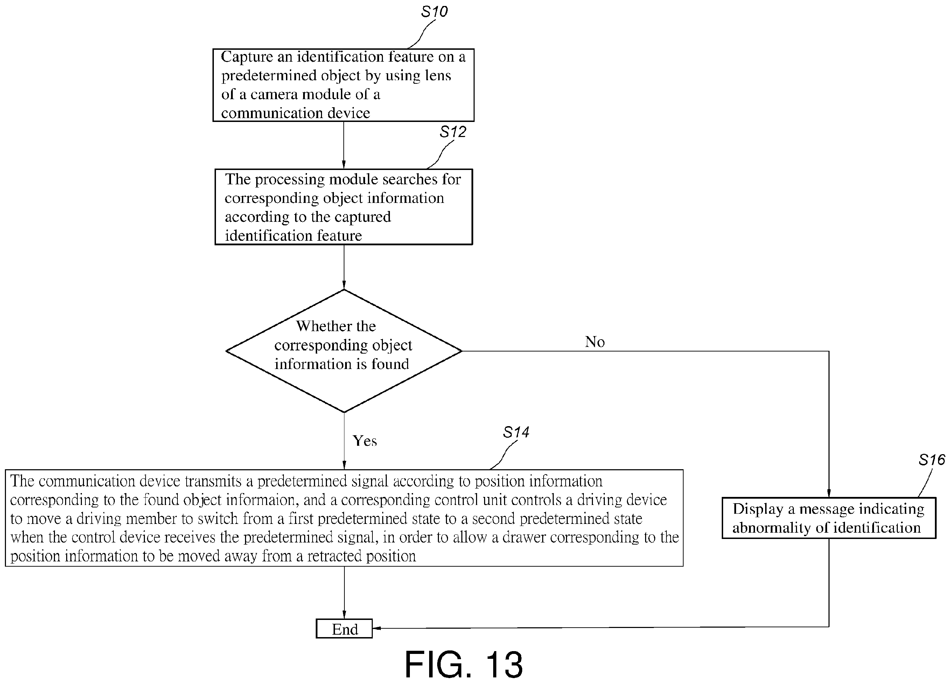

As shown in FIG. 12 and FIG. 13, when the user forgets which drawer on the cabinet body 22 the first predetermined object 90 is placed and stored in, the user can try to find the first predetermined object 90 by scanning a barcode (or a QR-code) on an outer box of an object that is the same as the first predetermined object 90.

Furthermore, the user can walk to a proper position close to the cabinet body 22. Accordingly, when the sensor 62 detects that the user is approaching the cabinet body 22, the intelligent cabinet system 20 is configured to be switched from the power saving mode to the operating mode.

Thus, the user can find object stored in the drawer of the intelligent cabinet system 20 through the following method.

An object finding method for the intelligent cabinet system 20 comprises the following steps: Step S10: Capture an identification feature on a predetermined object by using the lens of the camera module 108 of the communication device. In step S10, the user can select the barcode function 96 of the application program of the communication device 42 (as shown in FIG. 10), and the camera module 108 of the communication device 42 is turned on to capture (or scan) a second identification feature 118 on a second predetermined object 116 that is the same as the first identification feature 104 of the aforementioned first predetermined object 90 through the lens 114. The second identification feature 118 can be a barcode (or a QR-code), but the present invention is not limited thereto. The application program can obtain relevant information of the second predetermined object 116, such as the object name or the price of the second predetermined object 116, according to the second identification feature 118. On the other hand, the identification feature is not limited to barcode or QR-code. The identification feature can also be text or graphic design on an outer box of the object. The application program can obtain relevant information of the second predetermined object 116 according to a photo taken by the camera module 108. For example, the application program can perform text recognition according to the photo of the second predetermined object 116 in order to obtain the object name of the second predetermined object 116; or the application program can perform pattern comparison on the web according to the photo of the second predetermined object 116 in order to obtain the object name of the second predetermined object 116.

Step S12: The processing module 106 searches for corresponding object information according to the captured identification feature. In step S12, the processing module 106 searches for the corresponding object information 100 in the set of predetermined data pre-stored in the second storage unit 52 according to the captured second identification feature 118. For example, the processing module 106 is configured to obtain relevant information of the second predetermined object 116, such as the object name or the price of the second predetermined object 116, according to the captured second identification feature 118 on the second predetermined object 116. The processing module 106 then searches the set of predetermined data pre-stored in the second storage unit 52 for the object information 100 having the same object name (and/or the same price) . If the processing module 106 finds the object information 100 with the same object name (and/or the same price) in the set of predetermined data pre-stored in the second storage unit 52, then go to step S14; if the processing module 106 does not find the object information with the same object name (and/or the same price) in the set of predetermined data pre-stored in the second storage unit 52, then go to step S16.

Step S14: If the corresponding object information 100 is found, the communication device 42 transmits a predetermined signal S according to the position information 102 corresponding to the found object information 100, and the control device 32 notifies the corresponding control unit to control the driving device 88 to move the driving member 84 to switch from the first predetermined state K1 to the second predetermined state K2 when the control device 32 receives the predetermined signal S, in order to allow the drawer corresponding to the position information 102 to be moved away from the retracted position P1.

In step S14, when the processing module 106 determines that the pre-stored object name of the first predetermined object 90 is identical to the object name of the second predetermined object 116 (for example, both the object names are soap), it means that the corresponding object information is found. When the corresponding object information is found from the set of predetermined data, the processing module 106 is configured to obtain the position information of the first predetermined object 90 (such as the second drawer 24b) from the set of predetermined data. Thereafter, the screen 43 displays a corresponding option of the position information for the user to select by touch. When the user selects the corresponding option of the position information on the screen 43, the communication device 42 transmits the predetermined signal S (the content of the predetermined signal S comprises the identification code of the second drawer 24b and/or comprises the identification codes of the first control unit 40a and the second control unit 40b corresponding to the second drawer 24b). When the control device 32 receives the predetermined signal S, the control device 32 notifies the first control unit 40a and the second control unit 40b corresponding to the second drawer 24b to control the driving devices 88 to move the driving members 84 to switch from the first predetermined state K1 (please also refer to FIG. 7) to the second predetermined state K2 (please also refer to FIG. 8), in order to allow the drawer (such as the second drawer 24b) storing the first predetermined object 90 to be moved away from the retracted position P1. For example, the second drawer 24b is configured to be opened to move from the retracted position P1 to the open position P2 in response to the predetermined elastic force F released to the second rail 28. Therefore, the user can find the first predetermined object 90 in the opened second drawer 24b.

Step S16: If the corresponding object information is not found, the screen 43 of the communication device 42 displays a message indicating abnormality of identification. For example, when the processing module 106 determines that the object name of the second predetermined object 116 is not identical to the object name of the pre-stored object information of the first predetermined object 90 (for example, the object name of the second predetermined object 116 is not soap), it means that the corresponding object information is not found. When the corresponding object information is not found from the set of predetermined data, the processing module 106 is configured to control the screen 43 to display a message indicating abnormality of identification. In other words, no drawer has stored an object with the same object name as the second predetermined object 116. Therefore, no drawer (the first drawer to ninth drawer 24a-24i) of the intelligent cabinet system 20 is going to be opened.

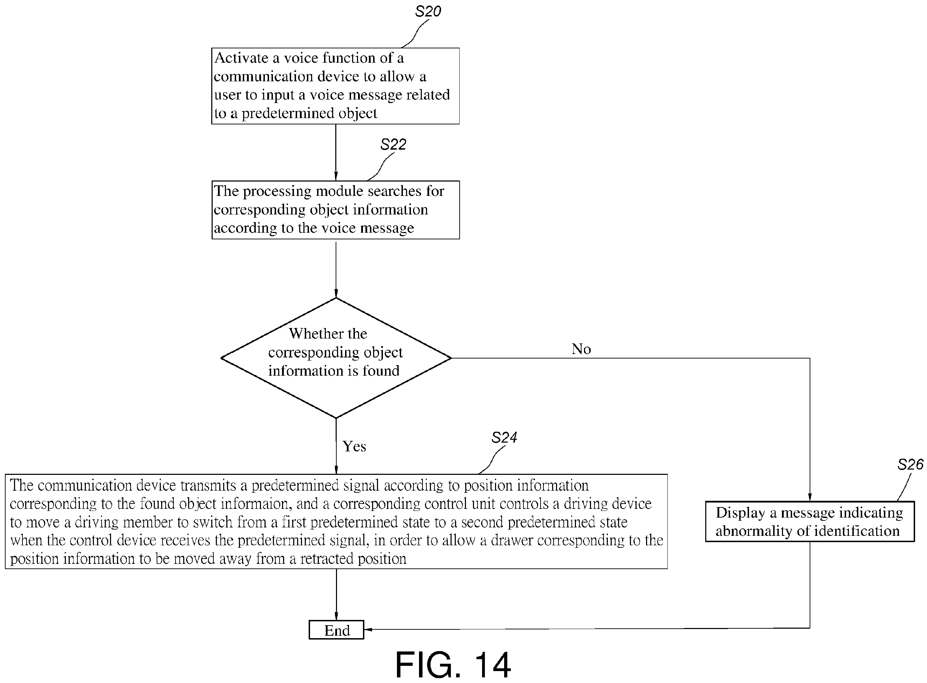

As shown in FIG. 12 and FIG. 14, in addition to the barcode scanning, the user can also try to find the first predetermined object 90 by voice. Another object finding method for the intelligent cabinet system 20 comprises the following steps:
Step S20: Activate the voice function of the communication device 42 to allow the user to input a voice message related to a predetermined object. In step S20, the user can select the voice function 98 of the application program of the communication device 42 (as shown in FIG. 10), and the user can directly speak the object name of the first predetermined object 90 (for example, soap) to the voice input module 110 of the communication device 42, so that a voice receiving unit of the voice input module 110 is configured to receive the user's voice message V.

Step S22: The processing module 106 searches for corresponding object information according to the voice message. In step S22, the processing module 106 searches for the corresponding object information in the set of predetermined data (comprising the object information 100 and the position information 102) pre-stored in the second storage unit 52 according to the voice message V. For example, the processing module 106 is configured to obtain the object name in the voice message V according to a voice recognition technology. The processing module 106 then searches the set of predetermined data pre-stored in the second storage unit 52 for the object information 100 having the same object name. If the processing module 106 finds the object information 100 with the same object name in the set of predetermined data pre-stored in the second storage unit 52, then go to step S24; if the processing module 106 does not find the object information with the same object name in the set of predetermined data pre-stored in the second storage unit 52, then go to step S26.

Step S24: If the corresponding object information 100 is found, the communication device 42 transmits a predetermined signal S according to the position information 102 corresponding to the found object information 100, and the control device 32 notifies the corresponding control unit to control the driving device 88 to move the driving member 84 to switch from the first predetermined state K1 to the second predetermined state K2 when the control device 32 receives the predetermined signal S, in order to allow the drawer corresponding to the position information 102 to be moved away from the retracted position P1.

In step S24, when the processing module 106 determines that the object name of the object information 100 in the pre-stored set of predetermined data is identical to the object name recognized according to the voice message V (for example, soap), it means that the corresponding object information is found. When the corresponding object information is found from the set of predetermined data, the processing module 106 is configured to obtain the position information (such as the second drawer 24b) of the first predetermined object 90 from the set of predetermined data. Thereafter, the screen 43 displays a corresponding option of the position information for the user to select by touch. When the user selects the corresponding option of the position information on the screen 43, the communication device 42 transmits the predetermined signal S (the content of the predetermined signal S comprises the identification code of the second drawer 24b and/or comprises the identification codes of the first control unit 40a and the second control unit 40b corresponding to the second drawer 24b). When the control device 32 receives the predetermined signal S, the control device 32 notifies the first control unit 40a and the second control unit 40b corresponding to the second drawer 24b to control the driving devices 88 to move the driving members 84 to switch from the first predetermined state K1 (please also refer to FIG. 7) to the second predetermined state K2 (please also refer to FIG. 8), in order to allow the drawer (such as the second drawer 24b) storing the first predetermined object 90 to be moved away from the retracted position P1. For example, the second drawer 24b is configured to be opened to move from the retracted position P1 to the open position P2 in response to the predetermined elastic force F released to the second rail 28. Therefore, the user can find the first predetermined object 90 in the opened second drawer 24b.

Step S26: If the corresponding object information is not found, the screen 43 of the communication device 42 displays a message indicating abnormality of identification. For example, when the processing module 106 determines that the object name of the object information 100 in the pre-stored set of predetermined data is not identical to the object name recognized according to the voice message V, it means that the corresponding object information is not found. When the corresponding object information is not found from the set of predetermined data, the processing module 106 is configured to control the screen 43 to display a message indicating abnormality of identification. In other words, no drawer stores the first predetermined object 90 (for example, the first predetermined object 90 has been taken away, and the object information and position information of the first predetermined object 90 have been deleted) . Therefore, no drawer (the first drawer to ninth drawer 24a-24i) of the intelligent cabinet system 20 is going to be opened.

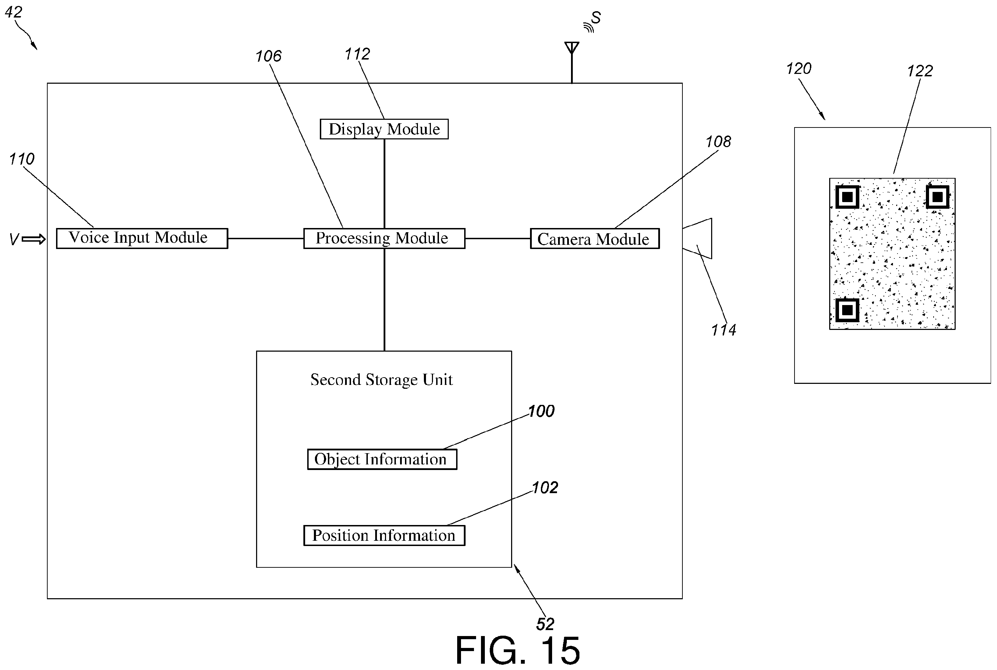

Please refer to FIG. 15, and refer to FIG. 10 and FIG. 11 as well. The user can create object information 100 of an object and position information 102 of the drawer (such as the second drawer 24b) where the object is stored through the object function 94 (as shown in FIG. 10) on the operating interface 92 of the application program.

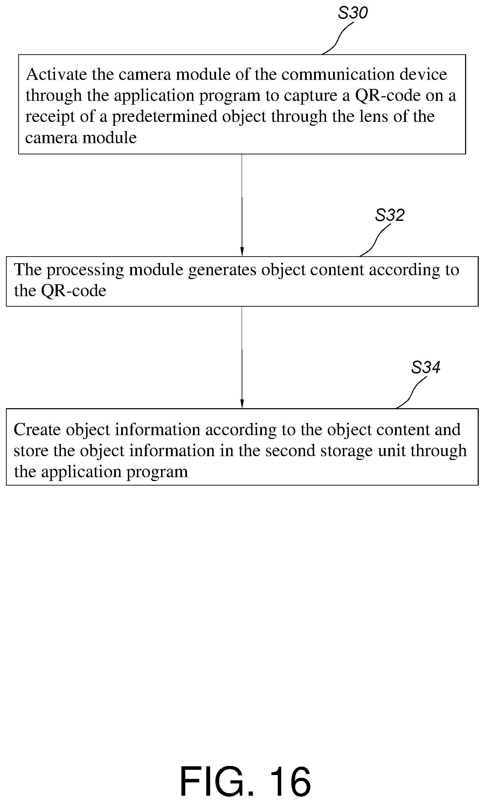

As shown in FIG. 16, an object relevant information creating method for the intelligent cabinet system comprises the following steps:
Step S30: Activate the camera module of the communication device through the application program to capture a QR-code on a receipt of a predetermined object through the lens of the camera module. In step S30, the user can activate the camera module 108 of the communication device 42 through the application program to capture (or scan) a QR-code 122 on a receipt 120 of a predetermined object (such as the first predetermined object 90 or the second predetermined object 116) through the lens 114 of the camera module 108. For example, when the user purchases the predetermined object in a store, the store gives the user a receipt of the predetermined object printed with a QR-code contenting purchase information (such as object name, quantity, price and/or date) of the predetermined object.

Step S32: The processing module generates object content according to the QR-code. In step S32, the processing module 106 generates object content according to the QR-code 122, and the object content comprises the object name, quantity, price and/or date of the purchased predetermined object. The object content is displayed on the screen 43 of the display module 112 accordingly. For example, the predetermined object purchased by the user is soap, the purchase quantity is 3, the purchase price is 90 yen, and/or the purchase date is June 6, 2023, etc.

Step S34: Create object information according to the object content and store the object information in the second storage unit 52 through the application program. In step 34, the user can quickly and easily create the object information 100 (please also refer to FIG. 11) through the application program according to information in the object content, and the object information 100 is further stored in the second storage unit 52 (please also refer to FIG. 15) through the application program. Preferably, the object relevant information creating method further comprises the screen 43 of the communication device 42 displaying the object information 100.

Preferably, the object relevant information creating method further comprises storing position information 102 (such as the second drawer 24b) of the predetermined object in the second storage unit 52 after placing and storing the predetermined object (such as the first predetermined object 90 or the second predetermined object 116) in one of the drawers. For example, the user can manually input the position information 102 of the predetermined object through the application program; or when the user uses the application program to select to open one of the drawers and create the object information 100, the application program automatically sets the position information 102 of the predetermined object as the opened drawer. When the position information 102 of the predetermined object is input or set, the application program further stores the position information 102 in the second storage unit 52.

Preferably, the object relevant information creating method further comprises displaying the object information 100 and the position information 102 on the screen 43 of the communication device 42.

Preferably, the object relevant information creating method further comprises editing the object information 100 and the position information 102 on the screen 43 through the application program.

Preferably, the object relevant information creating method further comprises establishing a wireless communication link between the communication device 42 and the control device 32 to synchronously update and store the object information 100 and the position information 102 stored in the second storage unit 52 to the first storage unit 50.

Therefore, the intelligent cabinet system 20 according to the embodiment of the present invention has the following technical features:
1. The user can find the object stored in the movable members (such as drawers) on the cabinet body 22 through the barcode function 96 and the voice function 98. The object function 94 can allow the user to input the object information 100 and the position information 102 on the communication device 42.
2. The control device 32 is arranged on the cabinet body 22. Moreover, the control device 32, the control units (such as the first control units 40a and the second control units 40b) and the electronic modules (such as the first electronic modules 34a and the second electronic modules 34b) are electrically connected to each other in a wired manner in order to avoid electromagnetic wave interference, so as to improve communication quality.

## Claims

1. An object finding method for an intelligent cabinet system, wherein the intelligent cabinet system (20) comprises:
a cabinet body (22);
a plurality of drawers arranged on the cabinet body (22) and movable between a retracted position and an open position relative to the cabinet body (22);
a control device (32) arranged on the cabinet body (22) and comprising a first storage unit (50);
a control unit electrically connected to the control device (32);
an electronic module electrically connected to the control unit and comprising a driving device (88) configured to drive a driving member (84) to move; and
a communication device (42) carried by a user and comprising a processing module (106), a second storage unit (52) and a camera module (108);
wherein at least one of the first storage unit (50) and the second storage unit (52) pre-stores a set of predetermined data comprising object information of at least one pre-stored object and position information corresponding to the object information;
the object finding method comprising:
capturing an identification feature (118) on a predetermined object (116) by using the camera module (108) of the communication device (42);
**characterized by**:
the processing module (106) searching for corresponding object information in the set of predetermined data of the at least one pre-stored object according to the captured identification feature (118); and
if the corresponding object information is found, the communication device (42) transmitting a predetermined signal according to position information corresponding to the found object information, and the control device (32) notifying the control unit to control the driving device (88) to move the driving member (84) to switch from a first predetermined state to a second predetermined state when the control device (32) receives the predetermined signal, in order to move the drawer corresponding to the position information away from the retracted position to the open position.

2. The object finding method of claim 1, further **characterized in that**:
if the corresponding object information is found, a screen (43) of the communication device (42) displaying a corresponding option of the position information corresponding to the found object information; and
if the corresponding object information is not found, the screen (43) of the communication device (42) displaying a message indicating abnormality of identification.

3. The object finding method of claim 2, **characterized in that** the screen (43) is a touch screen, and the identification feature (118) is a barcode or a QR-code.

4. The object finding method of any of claims 1-3, **characterized in that** both the first storage unit (50) and the second storage unit (52) pre-store the set of predetermined data comprising object information of at least one pre-stored object and position information corresponding to the object information.

5. The object finding method of any of claims 1-4, **characterized in that** the intelligent cabinet system (20) further comprises a plurality of slide rail assemblies configured to support the plurality of drawers correspondingly; wherein each of the slide rail assemblies comprises a first rail (27), a second rail (28) and an elastic member (86), the first rail (27) is configured to be mounted to the cabinet body (22), the second rail (28) is movable relative to the first rail (27) and configured to carry the drawer; wherein when the drawer is located at the retracted position relative to the cabinet body (22), the elastic member (86) is configured to accumulate a predetermined elastic force; the object finding method further comprising:
when the driving member (88) is moved to switch from the first predetermined state to the second predetermined state, the elastic member (86) releasing the predetermined elastic force, and the second rail (27) driving the drawer to move from the retracted position to the open position in response to the predetermined elastic force released by the elastic member (86).

6. The object finding method of any of claims 1-5, further **characterized by**:
establishing a wireless communication link between the communication device (42) and the control device (32) to synchronously update and store the set of predetermined data pre-stored in one of the first storage unit (50) and the second storage unit (52) to the other one of the first storage unit (50) and the second storage unit (52).

7. The object finding method of any of claims 1-6, **characterized in that** the intelligent cabinet system (20) further comprises a wireless device (44); the object finding method further comprising:
linking the communication device (42) to the control device (32) through the wireless device (44).

8. The object finding method of claim 7, further **characterized by**:
establishing a communication link between the wireless device (44) and the control device (32) through operating the communication device (42) to synchronously update and store the set of predetermined data stored in the first storage unit (50) of the control device (32) to a third storage unit (54) of the wireless device (44).

9. The object finding method of claim 8, **characterized in that** the intelligent cabinet system (20) further comprises a cloud server (48); the object finding method further comprising:
establishing a communication link between the wireless device (44) and the cloud server (48) through operating the communication device (42) to synchronously update and store the set of predetermined data stored in the third storage unit (54) of the wireless device (44) to a fourth storage unit (56) of the cloud server (48) .

10. The object finding method of claim 9, **characterized in that** the intelligent cabinet system (20) further comprises a gateway (46); wherein the wireless device (44) is linked with the cloud server (48) through the gateway (46).

11. The object finding method of claim 9, further **characterized by**:
establishing a wireless communication link between the communication device (42) and the cloud server (48).

12. The object finding method of any of claims 1-11, **characterized in that** the control unit is electrically connected to the control device (32) in a wired manner, and the electronic module is electrically connected to the control unit in a wired manner.

13. The object finding method of any of claims 1-12, **characterized in that** the communication device (42) further comprises a voice input module (110); wherein the object finding method further comprises:
activating a voice function of the communication device (42) to allow a user to input a voice message related to a predetermined object through the voice input module (110);
the processing module (106) searching for corresponding object information in the set of predetermined data according to the voice message; and
if the corresponding object information is found, the communication device (42) transmitting a predetermined signal according to position information corresponding to the found object information, and the control device (32) notifying the control unit to control the driving device (88) to move the driving member (84) to switch from the first predetermined state to the second predetermined state when the control device (32) receives the predetermined signal, in order to allow the drawer corresponding to the position information to be moved away from the retracted position.

14. The object finding method of any of claims 1-13, **characterized in that** the communication device (42) is installed with an application program; wherein the object finding method further comprises:
activating the camera module (108) of the communication device (42) through the application program to capture a QR-code on a receipt of a predetermined object through lens (114) of the camera module (108);
the processing module (106) generating object content according to the QR-code; and
creating object information according to the object content and storing the object information in the second storage unit (52) through the application program.

15. The object finding method of claim 14, further **characterized by**:
storing position information of the predetermined object in the second storage unit (52) after placing and storing the predetermined object in one of the drawers.

## Patentansprüche

1. Objektfindeverfahren für ein intelligentes Schranksystem, wobei das intelligente Schranksystem (20) aufweist:
einen Schrankkörper (22),
eine Mehrzahl von Schubladen, die am Schrankkörper (22) angeordnet und relativ zum Schrankkörper (22) zwischen einer Einfahrposition und einer Öffnungsposition bewegbar sind,
eine Steuervorrichtung (32), die am Schrankkörper (22) angeordnet ist und eine erste Speichereinheit (50) aufweist,
eine Steuereinheit, die elektrisch mit der Steuervorrichtung (32) verbunden ist,
ein elektronisches Modul, das elektrisch mit der Steuereinheit verbunden ist und eine Antriebsvorrichtung (88) aufweist, die konfiguriert ist, um ein Antriebselement (84) zum Bewegen anzutreiben, und
eine Kommunikationsvorrichtung (42), die von einem Benutzer getragen wird und ein Verarbeitungsmodul (106), eine zweite Speichereinheit (52) und ein Kameramodul (108) aufweist,
wobei mindestens eine von der ersten Speichereinheit (50) und der zweiten Speichereinheit (52) einen Satz von vorbestimmten Daten vorab speichert, der Objektinformationen mindestens eines vorab gespeicherten Objekts und mit den Objektinformationen korrespondierende Positionsinformationen aufweist,
wobei das Objektfindeverfahren aufweist:
Erfassen eines Identifikationsmerkmals (118) an einem vorbestimmten Objekt (116) unter Verwendung des Kameramoduls (108) der Kommunikationsvorrichtung (42),
**gekennzeichnet durch**:
Suchen, durch das Verarbeitungsmodul (106), von korrespondierenden Objektinformationen in dem Satz von vorbestimmten Daten des mindestens einen vorab gespeicherten Objekts gemäß dem erfassten Identifikationsmerkmal (118), und
wenn die korrespondierenden Objektinformationen gefunden werden, Senden, durch die Kommunikationsvorrichtung (42), eines vorbestimmten Signals gemäß Positionsinformationen, die mit den gefundenen Objektinformationen korrespondieren, und Melden, durch die Steuervorrichtung (32), an die Steuereinheit, die Antriebsvorrichtung (88) zu steuern, um das Antriebselement (84) zu bewegen, um von einem ersten vorbestimmten Zustand in einen zweiten vorbestimmten Zustand zu wechseln, wenn die Steuervorrichtung (32) das vorbestimmte Signal empfängt, um die Schublade korrespondierend mit den Positionsinformationen von der Einfahrposition weg in die Öffnungsposition zu bewegen.

2. Objektfindeverfahren gemäß Anspruch 1, ferner **dadurch gekennzeichnet, dass**:
wenn die korrespondierenden Objektinformationen gefunden werden, ein Bildschirm (43) der Kommunikationsvorrichtung (42) eine entsprechende Option der Positionsinformationen anzeigt, die mit den gefundenen Objektinformationen korrespondieren, und
wenn die korrespondierenden Objektinformationen nicht gefunden werden, der Bildschirm (43) der Kommunikationsvorrichtung (42) eine Nachricht anzeigt, die eine Identifikationsanomalie anzeigt.

3. Objektfindeverfahren gemäß Anspruch 2, **dadurch gekennzeichnet, dass** der Bildschirm (43) ein Berührungsbildschirm ist und das Identifikationsmerkmal (118) ein Barcode oder ein QR-Code ist.

4. Objektfindeverfahren gemäß irgendeinem der Ansprüche 1 bis 3, **dadurch gekennzeichnet, dass** sowohl die erste Speichereinheit (50) als auch die zweite Speichereinheit (52) den Satz von vorbestimmten Daten vorab speichern, der Objektinformationen mindestens eines vorab gespeicherten Objekts und mit den Objektinformationen korrespondierende Positionsinformationen aufweist.

5. Objektfindeverfahren gemäß irgendeinem der Ansprüche 1 bis 4, **dadurch gekennzeichnet, dass** das intelligente Schranksystem (20) ferner eine Mehrzahl von Gleitschienenbaugruppen aufweist, die konfiguriert sind, um die Mehrzahl von Schubladen entsprechend abzustützen, wobei jede der Gleitschienenbaugruppen eine erste Schiene (27), eine zweite Schiene (28) und ein elastisches Element (86) aufweist, wobei die erste Schiene (27) konfiguriert ist, um am Schrankkörper (22) montiert zu sein, die zweite Schiene (28) relativ zur ersten Schiene (27) bewegbar ist und konfiguriert ist, um die Schublade zu tragen, wobei, wenn sich die Schublade relativ zum Schrankkörper (22) in der Einfahrposition befindet, das elastische Element (86) konfiguriert ist, um eine vorbestimmte Federkraft zu kumulieren, wobei das Objektfindeverfahren ferner aufweist:
wenn das Antriebselement (88) bewegt wird, um vom ersten vorbestimmten Zustand in den zweiten vorbestimmten Zustand zu wechseln, Lösen der vorbestimmten Federkraft durch das elastische Element (86) und Antreiben der Schublade, um sich aus der Einfahrposition in die Öffnungsposition zu bewegen, durch die zweite Schiene (27), als Reaktion darauf, dass die vorbestimmte Federkraft durch das elastische Element (86) gelöst wird.

6. Objektfindeverfahren gemäß irgendeinem der Ansprüche 1 bis 5, ferner **gekennzeichnet durch**:
Herstellen einer drahtlosen Kommunikationsverbindung zwischen der Kommunikationsvorrichtung (42) und der Steuervorrichtung (32), um den Satz von vorbestimmten Daten, der in einer von der ersten Speichereinheit (50) und der zweiten Speichereinheit (52) vorab gespeichert ist, synchron zu aktualisieren und in der jeweils anderen der ersten Speichereinheit (50) und der zweiten Speichereinheit (52) zu speichern.

7. Objektfindeverfahren gemäß irgendeinem der Ansprüche 1 bis 6,
**dadurch gekennzeichnet, dass** das intelligente Schranksystem (20) ferner eine Drahtlosvorrichtung (44) aufweist, wobei das Objektfindeverfahren ferner aufweist:
Verbinden der Kommunikationsvorrichtung (42) mit der Steuervorrichtung (32) über die Drahtlosvorrichtung (44).

8. Objektfindeverfahren gemäß Anspruch 7, ferner **gekennzeichnet durch**:
Herstellen einer Kommunikationsverbindung zwischen der Drahtlosvorrichtung (44) und der Steuervorrichtung (32) durch Betreiben der Kommunikationsvorrichtung (42), um den in der ersten Speichereinheit (50) der Steuervorrichtung (32) gespeicherten Satz von vorbestimmten Daten synchron zu aktualisieren und in einer dritten Speichereinheit (54) der Drahtlosvorrichtung (44) zu speichern.

9. Objektfindeverfahren gemäß Anspruch 8, **dadurch gekennzeichnet, dass** das intelligente Schranksystem (20) ferner einen Cloud-Server (48) aufweist, wobei das Objektfindeverfahren ferner aufweist:
Herstellen einer Kommunikationsverbindung zwischen der Drahtlosvorrichtung (44) und dem Cloud-Server (48) durch Betreiben der Kommunikationsvorrichtung (42), um den in der dritten Speichereinheit (54) der Drahtlosvorrichtung (44) gespeicherten Satz von vorbestimmten Daten synchron zu aktualisieren und in einer vierten Speichereinheit (56) des Cloud-Servers (48) zu speichern.

10. Objektfindeverfahren gemäß Anspruch 9, **dadurch gekennzeichnet, dass** das intelligente Schranksystem (20) ferner ein Gateway (46) aufweist, wobei die Drahtlosvorrichtung (44) über das Gateway (46) mit dem Cloud-Server (48) verbunden ist.

11. Objektfindeverfahren gemäß Anspruch 9, ferner **gekennzeichnet durch**:
Herstellen einer drahtlosen Kommunikationsverbindung zwischen der Kommunikationsvorrichtung (42) und dem Cloud-Server (48).

12. Objektfindeverfahren gemäß irgendeinem der Ansprüche 1 bis 11, **dadurch gekennzeichnet, dass** die Steuereinheit drahtgebunden elektrisch mit der Steuervorrichtung (32) verbunden ist und das elektronische Modul drahtgebunden elektrisch mit der Steuereinheit verbunden ist.

13. Objektfindeverfahren gemäß irgendeinem der Ansprüche 1 bis 12, **dadurch gekennzeichnet, dass** die Kommunikationsvorrichtung (42) ferner ein Spracheingabemodul (110) aufweist, wobei das Objektfindeverfahren ferner aufweist:
Aktivieren einer Sprachfunktion der Kommunikationsvorrichtung (42), um einem Benutzer zu ermöglichen, über das Spracheingabemodul (110) eine Sprachnachricht bezüglich eines vorbestimmten Objekts einzugeben,
Suchen nach korrespondierenden Objektinformationen im Satz von vorbestimmten Daten gemäß der Sprachnachricht durch das Verarbeitungsmodul (106), und
wenn die korrespondierenden Objektinformationen gefunden werden, Senden, durch die Kommunikationsvorrichtung (42), eines vorbestimmten Signals gemäß Positionsinformationen, die mit den gefundenen Objektinformationen korrespondieren, und Melden, durch die Steuervorrichtung (32), an die Steuereinheit, die Antriebsvorrichtung (88) zu steuern, um das Antriebselement (84) zu bewegen, um von dem ersten vorbestimmten Zustand in den zweiten vorbestimmten Zustand zu wechseln, wenn die Steuervorrichtung (32) das vorbestimmte Signal empfängt, um zu ermöglichen, dass die mit den Positionsinformationen korrespondierende Schublade aus der Einfahrposition wegbewegt wird.

14. Objektfindeverfahren gemäß irgendeinem der Ansprüche 1 bis 13, **dadurch gekennzeichnet, dass** die Kommunikationsvorrichtung (42) mit einem Anwendungsprogramm installiert ist, wobei das Objektfindeverfahren ferner aufweist:
Aktivieren des Kameramoduls (108) der Kommunikationsvorrichtung (42) über das Anwendungsprogramm, um einen QR-Code auf einem Beleg eines vorbestimmten Objekts durch eine Linse (114) des Kameramoduls (108) zu erfassen,
Erzeugen von Objektinhalten gemäß dem QR-Code durch das Verarbeitungsmodul (106), und
Erzeugen von Objektinformationen gemäß den Objektinhalten und Speichern der Objektinformationen über das Anwendungsprogramm in der zweiten Speichereinheit (52).

15. Objektfindeverfahren gemäß Anspruch 14, ferner **gekennzeichnet durch**:
Speichern von Positionsinformationen des vorbestimmten Objekts in der zweiten Speichereinheit (52) nach dem Platzieren und Speichern des vorbestimmten Objekts in einer der Schubladen.

## Revendications

1. Procédé de localisation d'objet pour un système d'armoire intelligent, dans lequel le système d'armoire intelligent (20) comprend :
un corps d'armoire (22) ;
une pluralité de tiroirs disposés sur le corps d'armoire (22) et pouvant se déplacer entre une position rétractée et une position ouverte par rapport au corps d'armoire (22) ;
un dispositif de commande (32) disposé sur le corps d'armoire (22) et comprenant une première unité de stockage (50) ;
une unité de commande connectée électriquement au dispositif de commande (32) ;
un module électronique connecté électriquement à l'unité de commande et comprenant un dispositif d'entraînement (88) configuré pour entraîner un élément d'entraînement (84) afin qu'il se déplace ; et
un dispositif de communication (42) porté par un utilisateur et comprenant un module de traitement (106), une deuxième unité de stockage (52) et un module de caméra (108) ;
dans lequel au moins l'une parmi la première unité de stockage (50) et la deuxième unité de stockage (52) préenregistre un ensemble de données prédéterminées comprenant des informations d'objet d'au moins un objet préenregistré et des informations de position correspondant aux informations d'objet ;
le procédé de localisation d'objet comprenant :
la capture d'une caractéristique d'identification (118) sur un objet prédéterminé (116) en utilisant le module de caméra (108) du dispositif de communication (42) ;
**caractérisé par** :
le module de traitement (106) recherchant des informations d'objet correspondantes dans l'ensemble de données prédéterminées de l'au moins un objet préenregistré en fonction de la caractéristique d'identification capturée (118) ; et
si les informations d'objet correspondantes sont trouvées, le dispositif de communication (42) transmettant un signal prédéterminé en fonction d'informations de position correspondant aux informations d'objet trouvées, et le dispositif de commande (32) notifiant à l'unité de commande de commander le dispositif d'entraînement (88) afin de déplacer l'élément d'entraînement (84) pour passer d'un premier état prédéterminé à un deuxième état prédéterminé lorsque le dispositif de commande (32) reçoit le signal prédéterminé, afin de déplacer le tiroir correspondant aux informations de position à l'écart de la position rétractée vers la position ouverte.

2. Procédé de localisation d'objet selon la revendication 1, **caractérisé en outre en ce que** :
si les informations d'objet correspondantes sont trouvées, un écran (43) du dispositif de communication (42) affiche une option correspondante des informations de position correspondant aux informations d'objet trouvées ; et
si les informations d'objet correspondantes ne sont pas trouvées, l'écran (43) du dispositif de communication (42) affiche un message indiquant une anomalie d'identification.

3. Procédé de localisation d'objet selon la revendication 2, **caractérisé en ce que** l'écran (43) est un écran tactile, et la caractéristique d'identification (118) est un code-barres ou un code QR.

4. Procédé de localisation d'objet selon l'une quelconque des revendications 1 à 3, **caractérisé en ce que** la première unité de stockage (50) et la deuxième unité de stockage (52) préenregistrent toutes les deux l'ensemble de données prédéterminées comprenant des informations d'objet d'au moins un objet préenregistré et des informations de position correspondant aux informations d'objet.

5. Procédé de localisation d'objet selon l'une quelconque des revendications 1 à 4, **caractérisé en ce que** le système d'armoire intelligent (20) comprend en outre une pluralité d'ensembles de glissières configurés pour supporter la pluralité de tiroirs de manière correspondante ; dans lequel chacun des ensembles de glissières comprend un premier rail (27), un deuxième rail (28) et un élément élastique (86), le premier rail (27) est configuré pour être monté sur le corps d'armoire (22), le deuxième rail (28) est mobile par rapport au premier rail (27) et configuré pour porter le tiroir ; dans lequel, lorsque le tiroir se trouve en position rétractée par rapport au corps d'armoire (22), l'élément élastique (86) est configuré pour accumuler une force élastique prédéterminée ; le procédé de localisation d'objet comprenant en outre :
lorsque l'élément d'entraînement (88) est déplacé pour passer du premier état prédéterminé au deuxième état prédéterminé, l'élément élastique (86) libère la force élastique prédéterminée, et le deuxième rail (27) entraîne le tiroir pour qu'il se déplace de la position rétractée à la position ouverte en réponse à la force élastique prédéterminée libérée par l'élément élastique (86).

6. Procédé de localisation d'objet selon l'une quelconque des revendications 1 à 5, **caractérisé en outre par** :
l'établissement d'une liaison de communication sans fil entre le dispositif de communication (42) et le dispositif de commande (32) afin de mettre à jour et de stocker de manière synchrone l'ensemble de données prédéterminées préenregistrées dans l'une des première unité de stockage (50) et deuxième unité de stockage (52) vers l'autre des première unité de stockage (50) et deuxième unité de stockage (52).

7. Procédé de localisation d'objet selon l'une quelconque des revendications 1 à 6,
**caractérisé en ce que** le système d'armoire intelligent (20) comprend en outre un dispositif sans fil (44) ; le procédé de localisation d'objet comprenant en outre :
la connexion du dispositif de communication (42) au dispositif de commande (32) par l'intermédiaire du dispositif sans fil (44).

8. Procédé de localisation d'objet selon la revendication 7, **caractérisé en outre par** :
l'établissement d'une liaison de communication entre le dispositif sans fil (44) et le dispositif de commande (32) par l'intermédiaire de l'actionnement du dispositif de communication (42) afin de mettre à jour et de stocker de manière synchrone l'ensemble de données prédéterminées stockées dans la première unité de stockage (50) du dispositif de commande (32) vers une troisième unité de stockage (54) du dispositif sans fil (44).

9. Procédé de localisation d'objet selon la revendication 8, **caractérisé en ce que** le système d'armoire intelligent (20) comprend en outre un serveur cloud (48) ; le procédé de localisation d'objet comprenant en outre :
l'établissement d'une liaison de communication entre le dispositif sans fil (44) et le serveur cloud (48) par l'intermédiaire de l'actionnement du dispositif de communication (42) afin de mettre à jour et de stocker de manière synchrone l'ensemble de données prédéterminées stockées dans la troisième unité de stockage (54) du dispositif sans fil (44) vers une quatrième unité de stockage (56) du serveur cloud (48).

10. Procédé de localisation d'objet selon la revendication 9, **caractérisé en ce que** le système d'armoire intelligent (20) comprend en outre une passerelle (46) ; dans lequel le dispositif sans fil (44) est relié au serveur cloud (48) par l'intermédiaire de la passerelle (46).

11. Procédé de localisation d'objet selon la revendication 9, **caractérisé en outre par** :
l'établissement d'une liaison de communication sans fil entre le dispositif de communication (42) et le serveur cloud (48).

12. Procédé de localisation d'objet selon l'une quelconque des revendications 1 à 11, **caractérisé en ce que** l'unité de commande est connectée électriquement au dispositif de commande (32) par une liaison filaire, et le module électronique est connecté électriquement à l'unité de commande par une liaison filaire.

13. Procédé de localisation d'objet selon l'une quelconque des revendications 1 à 12, **caractérisé en ce que** le dispositif de communication (42) comprend en outre un module d'entrée vocale (110) ; dans lequel le procédé de localisation d'objet comprend en outre :
l'activation d'une fonction vocale du dispositif de communication (42) pour permettre à un utilisateur de saisir un message vocal relatif à un objet prédéterminé via le module d'entrée vocale (110) ;
le module de traitement (106) recherchant des informations d'objet correspondantes dans l'ensemble de données prédéterminées en fonction du message vocal ; et
si les informations d'objet correspondantes sont trouvées, le dispositif de communication (42) transmettant un signal prédéterminé en fonction d'informations de position correspondant aux informations d'objet trouvées, et le dispositif de commande (32) notifiant à l'unité de commande de commander le dispositif d'entraînement (88) afin de déplacer l'élément d'entraînement (84) pour passer du premier état prédéterminé au deuxième état prédéterminé lorsque le dispositif de commande (32) reçoit le signal prédéterminé, afin de permettre au tiroir correspondant aux informations de position d'être éloigné de la position rétractée.

14. Procédé de localisation d'objet selon l'une quelconque des revendications 1 à 13, **caractérisé en ce que** le dispositif de communication (42) est installé avec un programme d'application ; dans lequel le procédé de localisation d'objet comprend en outre :
l'activation du module de caméra (108) du dispositif de communication (42) via le programme d'application afin de capturer un code QR sur un reçu d'un objet prédéterminé à travers un objectif (114) du module de caméra (108) ;
le module de traitement (106) générant du contenu d'objet en fonction du code QR ; et
la création d'informations d'objet en fonction du contenu d'objet et le stockage des informations d'objet dans la deuxième unité de stockage (52) via le programme d'application.

15. Procédé de localisation d'objet selon la revendication 14, **caractérisé en outre par** :
le stockage d'informations de position de l'objet prédéterminé dans la deuxième unité de stockage (52) après le placement et stockage de l'objet prédéterminé dans l'un des tiroirs.
